(19) **Europäisches Patentamt / European Patent Office / Office européen des brevets**

(11) **EP 3 100 088 B1**

(12) # FASCICULE DE BREVET EUROPEEN

(45) Date de publication et mention de la délivrance du brevet:
**11.07.2018 Bulletin 2018/28**

(21) Numéro de dépôt: **15702446.4**

(22) Date de dépôt: **29.01.2015**

(51) Int Cl.:
*G02B 6/30* (2006.01)          *G02B 6/122* (2006.01)
*G02B 6/14* (2006.01)

(86) Numéro de dépôt international:
**PCT/EP2015/051853**

(87) Numéro de publication internationale:
**WO 2015/114060 (06.08.2015 Gazette 2015/31)**

(54) **MÉTHODE DE FABRICATION D'UN GUIDE D'ONDE OPTIQUE À STRUCTURE " RIDGE " À FAIBLES PERTES DE COUPLAGE ENTRE LE GUIDE D'ONDE OPTIQUE À STRUCTURE " RIDGE " ET UNE FIBRE OPTIQUE, ET GUIDE D'ONDE OPTIQUE À STRUCTURE " RIDGE " FABRIQUÉ PAR CETTE MÉTHODE**

VERFAHREN ZUR HERSTELLUNG EINES STEGLICHTWELLENLEITERS MIT NIEDRIGEN KOPPELVERLUSTEN ZWISCHEN DEM STEGLICHTWELLENLEITER UND EINER OPTISCHEN FASER SOWIE MIT DIESEM VERFAHREN HERGESTELLTER STEGLICHTWELLENLEITER

METHOD FOR PRODUCING A RIDGE OPTICAL WAVEGUIDE HAVING LOW COUPLING LOSSES BETWEEN THE RIDGE OPTICAL WAVEGUIDE AND AN OPTICAL FIBRE, AND A RIDGE OPTICAL WAVEGUIDE MADE USING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2014 FR 1450795**

(43) Date de publication de la demande:
**07.12.2016 Bulletin 2016/49**

(73) Titulaires:
• **Université de Franche-Comté**
  **25000 Besançon (FR)**
• **CNRS**
  **Centre National de la Recherche Scientifique**
  **75794 Paris Cedex 16 (FR)**

(72) Inventeurs:
• **COURJAL, Nadège**
  **25000 Besançon (FR)**
• **GERTHOFFER, Arnaud**
  **25115 Pouilley Les Vignes (FR)**
• **HENROT, Fabien**
  **67690 Hatten (FR)**
• **RAUCH, Jean-Yves**
  **25770 Serre Les Sapins (FR)**
• **GUYOT, Clément**
  **25000 Besançon (FR)**
• **EDOUARD, Blandine**
  **25870 Les Auxons (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**EP-A2- 2 006 732          WO-A1-2009/096321**
**US-A1- 2006 109 542**

## Description

### Domaine technique

La présente invention concerne en général des guides d'ondes optiques à structure « ridge » de l'anglais « ridge waveguide » que l'on pourrait traduire en français par guide en forme de crête ou microguide. Plus précisément, l'invention concerne une méthode de fabrication des guides d'ondes optiques à structure « ridge » à faibles pertes de couplage entre les guides d'ondes optiques à structure « ridge » et une fibre optique. En outre, l'invention concerne des guides d'ondes optiques à structure « ridge » fabriqués par la méthode mentionnée ci-dessus.

### Etat de la technique

Les guides d'ondes optiques à structure « ridge » ont attiré beaucoup d'attention au cours des trente dernières années, en raison de leurs potentialités à confiner la lumière pour renforcer les interactions électro-optiques, non linéaires ou acousto-optiques.

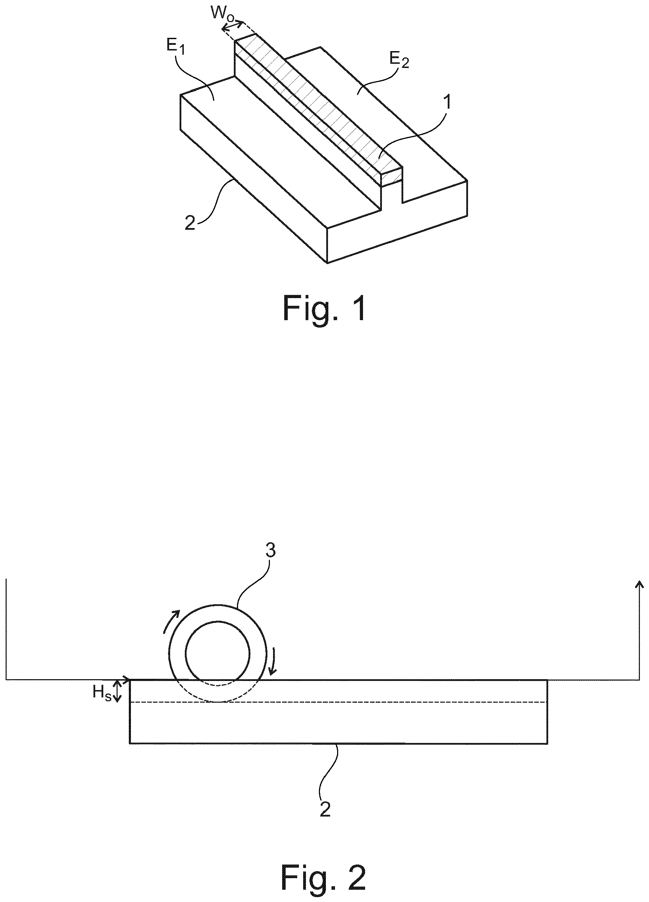

La figure 1 illustre un exemple d'un guide d'onde optique à structure « ridge » conventionnel. Particulièrement, la figure 1 illustre un guide d'onde optique à structure « ridge » 1 formé sur la surface d'un substrat diélectrique 2. Le guide d'onde optique à structure « ridge » 1 a une largeur $w_0$ et il est surélevé entre deux évidements (E1, E2) du substrat diélectrique 2.

Une méthode classique pour la fabrication du guide d'onde optique à structure « ridge » illustré dans la figure 1, comporte une étape préliminaire de formation d'un guide d'onde optique (planaire ou microruban) sur la surface d'un substrat diélectrique, afin d'assurer le confinement vertical de l'onde électromagnétique. Puis, la surface du substrat diélectrique est gravée pour la fabrication d'un guide d'onde optique à structure « ridge » qui assure le confinement latéral de l'onde électromagnétique. Particulièrement, la gravure du substrat diélectrique selon cette méthode classique est effectuée en réalisant d'abord une étape de lithographie sur la surface du substrat diélectrique afin d'inscrire le motif d'une zone que l'on ne veut pas graver. Cette étape de lithographie est suivie par une étape de dépôt d'un matériau dit « masque » qui couvre et protège la surface de cette zone à ne pas graver. Puis, une étape de gravure des zones du substrat diélectrique qui ne sont pas protégées par le masque est effectuée afin de former un guide d'onde optique à structure « ridge » sur toute la longueur de la zone protégée par le masque. La gravure des zones non protégées du substrat diélectrique peut être humide (par exemple gravure à l'acide fluorhydrique) ou sèche (par exemple gravure de type plasma ionique).

Cette méthode classique est lourde et coûteuse en temps. Après l'étape préliminaire de formation d'un guide d'onde optique planaire ou microruban qui dure approximativement 24 heures, la gravure du substrat diélectrique dure au minimum 2.5 heures. En outre, cette méthode classique utilise une grande quantité de consommables. Particulièrement, selon la méthode classique, la gravure du substrat diélectrique commence avec une étape de lithographie qui nécessite des pipettes et des résines photosensibles, un développeur, de l'eau désionisée pour éliminer le développeur et des chiffons spécifiques pour y déposer le substrat diélectrique. En outre, comme mentionné ci-dessus, la gravure du substrat diélectrique nécessite le dépôt d'un masque (en général métallique) pour couvrir la surface de la zone à ne pas graver. Par ailleurs, elle nécessite des solvants et produits chimiques pour enlever les résidus du masque après gravure et nettoyer le substrat diélectrique. En plus, la mise en oeuvre de la méthode classique nécessite un environnement de salle blanche qui implique l'utilisation d'une blouse, de gants jetables et de lunettes de protections. La gravure du substrat diélectrique selon la méthode classique nécessite aussi des cibles spécifiques destinées au dépôt du masque, de lignes de gaz et un bâti de gravure. De plus, les facteurs de forme (rapport hauteur/largeur) du guide d'onde optique à structure « ridge » fabriqué par cette méthode classique, sont limités par l'épaisseur du masque protégeant le substrat diélectrique lors de la gravure.

La publication « High aspect ratio lithium niobate ridge waveguides fabricated by optical grade dicing, J. Phys. D: Appl. Phys, 44 305101, (2011) » décrit une méthode alternative pour la fabrication du guide d'onde optique à structure « ridge » de la figure 1. Cette méthode est plus simple, plus rapide et plus économique. Particulièrement, cette méthode comporte également une étape préliminaire de formation d'un guide d'onde optique (planaire ou microruban) sur une surface du substrat diélectrique pour assurer le confinement vertical de l'onde électromagnétique. Cette étape préliminaire dure approximativement 24 heures, comme c'est le cas de l'étape préliminaire de la méthode classique. Cependant, selon cette méthode, le guide d'onde optique à structure « ridge » qui assure le confinement latéral de l'onde électromagnétique est formé par le découpage-polissage de deux évidements parallèles et espacés d'une distance $w_0$ sur la surface du substrat diélectrique, et pas par la gravure du substrat diélectrique selon la méthode classique décrite ci-dessus. Ce découpage-polissage est effectué dans une seule étape au moyen d'une scie circulaire comportant au moins une lame (par exemple une scie circulaire de précision de type DISCO DAD 321) et il dure approximativement 15 minutes pour la fabrication d'un guide d'onde optique à structure « ridge ». Ainsi, en utilisant la méthode de la publication mentionnée, il y a un gain de temps d'au moins 2.15 heures au regard de la méthode classique. En outre, les consommables utilisés pendant l'étape de découpage sont limités à la lame de la scie circulaire, un film adhésif pour maintenir le substrat diélectrique à une position fixe sur une plaque de découpage et du liquide de refroidissement utilisé pour refroidir la lame de la scie circulaire pendant le découpage. En outre, la méthode de la publication mentionnée n'est pas mise en oeuvre dans une salle blanche et ainsi, les consommables utilisées dans une salle blanche ne sont pas utilisées pour mettre en oeuvre cette méthode. De plus, il est à noter que dans la méthode de la publication mentionnée, l'utilisation d'un masque protégeant le substrat diélectrique pendant le découpage n'est pas exigée. Ainsi, les facteurs de forme (rapport hauteur/largeur) du guide d'onde optique à structure « ridge » fabriqué par cette méthode, ne sont pas limités par l'épaisseur d'un tel masque.

Particulièrement, comme illustré dans la figure 2, ce découpage-polissage est effectué au moyen d'une scie circulaire dont la lame 3 descend à la profondeur de découpage $H_s$ souhaitée en amont du substrat diélectrique 2 et puis elle est animée d'un mouvement de translation parallèle sur toute la longueur de la surface du substrat diélectrique 2 afin d'effectuer le découpage-polissage des évidements (E1, E2) parallèles et espacés d'une distance $w_0$. Il est à noter que la profondeur de découpage $H_s$ souhaitée correspond à la profondeur du guide d'onde optique à structure « ridge » formé par ce découpage. La trajectoire suivie par la lame 3, afin d'effectuer le découpage-polissage du substrat diélectrique 2, est représentée par les flèches de la figure 2.

Toutefois, lorsque le guide d'onde optique à structure « ridge » fabriqué par les méthodes décrites ci-dessus est couplé avec une fibre optique conventionnelle (par exemple une fibre optique de type SMF28 avec un mode optique faiblement confiné), il y a des pertes de couplage importantes entre le guide d'onde optique à structure « ridge » et la fibre optique conventionnelle. On entend ici par pertes de couplage entre le guide d'onde optique à structure « ridge » et la fibre optique, des pertes d'énergie électromagnétique à la connexion entre le guide d'onde optique à structure « ridge » et la fibre optique, où l'énergie électromagnétique est transmise entre la fibre optique et le guide d'onde optique à structure « ridge ».

La raison de ces pertes de couplage est que le mode optique du guide d'onde optique à structure « ridge » est plus confiné que le mode optique de la fibre optique conventionnelle, c'est-à-dire que la largeur à mi-hauteur latérale du mode optique dans le guide d'onde optique à structure « ridge » est plus faible que la largeur à mi-hauteur latérale du mode optique dans la fibre optique conventionnelle. Selon un exemple, un guide d'onde optique à structure « ridge » d'une largeur $w_0$ de 6 $\mu$m, a une largeur à mi-hauteur latérale du mode optique typiquement entre 2 $\mu$m et 2.5 $\mu$m alors qu'une fibre conventionnelle a une largeur à mi-hauteur latérale du mode optique typiquement de l'ordre de 5 $\mu$m. Ainsi, une grande partie de l'énergie de l'onde électromagnétique transmise par la fibre optique conventionnelle est perdue à la connexion de la fibre optique conventionnelle avec le guide d'onde optique à structure « ridge ».

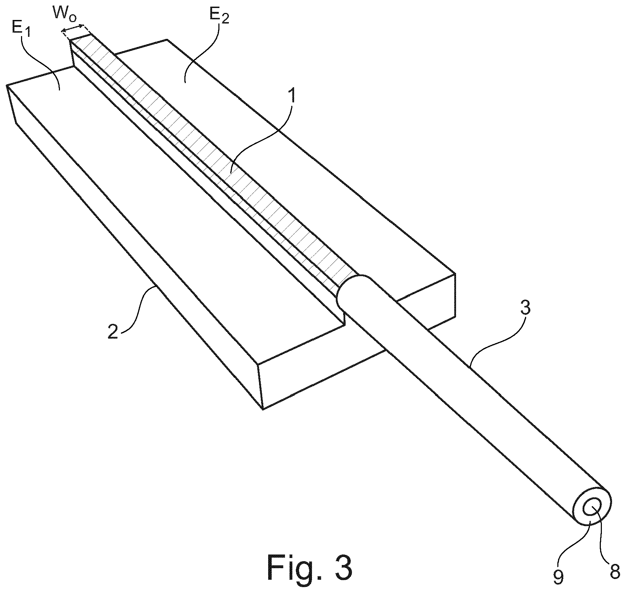

Particulièrement, la figure 3 illustre un exemple d'une connexion entre le guide d'onde optique à structure « ridge » 1 de la figure 1 avec une fibre optique conventionnelle 3. Comme il est connu par l'homme du métier, la fibre optique conventionnelle 3 comporte un coeur 8 qui transmet l'énergie électromagnétique le long de la fibre optique et qui est entouré d'une gaine 9. Particulièrement, lors de la connexion entre le guide d'onde optique à structure « ridge » 1 et la fibre optique conventionnelle 3, l'énergie électromagnétique est transmise par le coeur 8 vers le guide d'onde optique à structure « ridge ». Comme mentionné ci-dessus, le fait que le mode optique du guide d'onde optique à structure « ridge » 1 est plus confiné que le mode optique de la fibre optique conventionnelle 3 entraîne des pertes de couplage importantes entre le guide d'onde optique à structure « ridge » et la fibre optique conventionnelle 3. Plus précisément, ces pertes peuvent s'évaluer à partir de l'intégrale de recouvrement $\eta$ entre les deux modes optiques mentionnés ci-dessus, selon l'équation :

$$\eta = \frac{|\langle E_{in}, E_{out}\rangle|^2}{\langle E_{in}, E_{in}\rangle \langle E_{out}, E_{out}\rangle} \qquad (1)$$

où $\langle a(x,y), b(x,y)\rangle = \iint a(x,y)\overline{b(x,y)}dx\,dy$ dans lequel $a(x,y)$ correspond à $E_{in}$ et $b(x,y)$ correspond à $E_{out}$, et où $E_{in}$ indique la distribution spatiale du champ électrique dans le guide d'onde optique à structure « ridge », et $E_{out}$ indique la distribution spatiale du champ électrique dans la fibre optique. Ainsi, si le mode optique du guide d'onde optique à structure « ridge » a un profil très différent de celui du mode optique de la fibre optique conventionnelle (ce qui peut s'évaluer par une comparaison des largeurs à mi-hauteur des modes optiques), l'intégrale de recouvrement est très faible, ainsi que l'énergie électromagnétique transmise entre la fibre optique et le guide d'onde optique à structure «ridge ».

Il existe donc un réel besoin de proposer une méthode de fabrication d'un guide d'onde optique à structure « ridge » qui soit simple, rapide et économique, comme c'est le cas dans la méthode proposée dans la publication mentionnée ci-dessus, mais en même temps qui soit apte à fabriquer un guide d'onde optique à structure « ridge » à faibles pertes de couplage entre le guide d'onde à structure « ridge » et une fibre optique conventionnelle.

**Description de l'invention**

Un objet de l'invention concerne une méthode de fabrication d'un guide d'onde optique à structure « ridge » à faibles pertes de couplage entre le guide d'onde optique à structure « ridge »et une fibre optique, la méthode comportant les étapes suivantes:

- formation d'un guide d'onde optique sur la surface d'un substrat diélectrique, le guide d'onde optique ayant une première extrémité et une seconde extrémité opposée à la première extrémité;

- découpage de deux évidements parallèles et espacés d'une distance $w_r$ sur la surface du substrat diélectrique pour former un guide d'onde optique à structure « ridge » d'une largeur $w_r$ surélevée entre les deux évidements,

caractérisée en ce que le découpage est tel que la profondeur de chaque évidement évolue continument et progressivement entre une profondeur nulle à la hauteur de la première extrémité du guide d'onde optique destinée à recevoir la fibre optique, et une profondeur maximale à une distance prédéterminée $l_p$ de la première extrémité du guide d'onde optique, l'évolution de la profondeur de chaque évidement formant une zone de transition verticale de mode optique de longueur $l_p$ entre le guide d'onde optique à structure « ridge » et la fibre optique.

La zone de transition verticale de mode optique entre le guide d'onde optique à structure « ridge » et la fibre optique formée après le découpage du substrat diélectrique selon la méthode de l'invention, sert à réduire les pertes de couplage entre le guide d'onde optique à structure « ridge » et la fibre optique.

Ainsi, la méthode de l'invention sert à fabriquer un guide d'onde optique à structure « ridge » qui présente de faibles pertes de couplage entre le guide d'onde optique à structure « ridge »et une fibre optique en contraste avec les guides d'ondes optiques à structure « ridge » fabriqués par les méthodes de l'art antérieur qui présentent des pertes de couplage importantes entre le guide d'onde optique à structure « ridge » et une fibre optique. En outre, la méthode de l'invention est simple, rapide et économique en comparaison avec la méthode classique décrite dans l'état de la technique. Particulièrement, la fabrication d'un guide d'onde optique à structure « ridge » selon la méthode de l'invention dure approximativement 24 heures (pour la formation du guide d'onde optique planaire ou microruban) et approximativement 15 minutes (pour le découpage du substrat diélectrique afin de former un guide d'onde optique à structure « ridge »). En outre, les consommables utilisés pendant l'étape de découpage sont limités à la lame d'une scie circulaire pour effectuer le découpage, un film adhésif pour maintenir le substrat diélectrique à une position fixe sur une plaque de découpage et de l'eau de refroidissement utilisé pour refroidir la lame de la scie circulaire après le découpage. De plus, il est à noter que dans la méthode de l'invention, l'utilisation d'un masque protégeant le substrat diélectrique pendant le découpage n'est pas exigée. Ainsi, les facteurs de forme (rapport hauteur/largeur) du guide d'onde optique à structure « ridge » fabriqué par la méthode de l'invention, ne sont pas limités par l'épaisseur d'un tel masque.

Des caractéristiques ou des modes de réalisation particuliers, utilisables seuls ou en combinaison, sont :

- le guide d'onde optique est un guide d'onde planaire

- la diminution de la profondeur de chaque évidement est effectuée à partir de la première extrémité du guide d'onde optique

- le guide d'onde optique est un guide d'onde microruban

- la diminution de la profondeur de chaque évidement est effectuée à partir d'une distance prédéterminée à partir de la première extrémité du guide d'onde optique

- le découpage est un découpage mécanique

- le découpage mécanique est effectué au moyen d'une scie circulaire comportant au moins une lame

- le découpage mécanique est effectué au moyen d'une lame de la scie circulaire

- la lame de la scie circulaire est descendue progressivement à la hauteur de la distance prédéterminée de la première extrémitédu guide d'onde optique, de sorte que la profondeur évolue comme un arc de cercle de rayon égal au rayon de la lame de la scie circulaire

- la lame de la scie circulaire est animée d'un mouvement de translation parallèle à la surface du substrat diélectrique, une fois qu'elle atteint une profondeur désirée des évidements mentionnés

- le découpage mécanique est effectué au moyen de deux lames de la scie circulaire de même axe et éloignées l'une de l'autre de la largeur $w_r$ du guide d'onde optique à structure « ridge »

- le découpage est effectué par gravure laser

- le découpage est tel que la profondeur de chaque évidement évolue continument et progressivement entre une profondeur nulle à la hauteur de la seconde extrémité du guide d'onde optique et une profondeur maximale à une distance prédéterminée $l_p$ de la seconde extrémité du guide d'onde optique destinée à recevoir une fibre optique, l'évolution de la profondeur de chaque évidement formant une zone de transition verticale de mode optique de longueur $l_p$ entre le guide d'onde optique à structure « ridge » et une fibre optique

Un autre objet de l'invention concerne un guide d'onde optique à structure « ridge » à faibles pertes de couplage entre le guide d'onde optique à structure « ridge » et une fibre optique, caractérisé en ce qu'il est fabriqué par la méthode de l'invention.

**Brève description des figures**

L'invention sera mieux comprise à la lecture de la description qui suit, faite uniquement à titre d'exemple, et en référence aux figures en annexe dans lesquelles :

- La figure 1 représente une vue en perspective d'un guide d'onde optique à structure « ridge » de l'art antérieur ;

- La figure 2 représente le découpage d'un substrat diélectrique pour la formation d'un guide d'onde optique à structure « ridge » selon une méthode de fabrication d'un guide d'onde optique à structure « ridge » de l'art antérieur;

- La figure 3 représente la connexion entre le guide d'onde optique à structure « ridge » de la figure 1 avec une fibre optique conventionnelle ;

- La figure 4 représente une méthode de fabrication d'un guide d'onde optique à structure « ridge » selon un mode de réalisation de l'invention ;

- La figure 5a représente un exemple d'un guide d'onde optique formé sur la surface d'un substrat diélectrique dans la première étape de la méthode de la figure 4 ;

- La figure 5b représente un autre exemple d'un guide d'onde optique formé sur la surface d'un substrat diélectrique dans la première étape de la méthode de la figure 4 ;

- La figure 6a représente un exemple d'un guide d'onde optique à structure « ridge » formé dans la seconde étape de la méthode de la figure 4 ;

- La figure 6b représente un autre exemple d'un guide d'onde optique à structure « ridge » formé dans la seconde étape de la méthode de la figure 4 ;

- La figure 7 représente le guide d'onde optique à structure « ridge » de la figure 6b avec une cale et une férule ;

- La figure 8 représente le découpage de la surface du substrat diélectrique effectuée pour fabriquer un guide d'onde optique à structure « ridge » ayant la configuration du guide d'onde optique à structure « ridge » de l'exemple de la figure 6a ;

- La figure 9 représente un guide d'onde optique à structure « ridge » comportant deux zones de transition verticales de mode optique entre le guide d'onde optique à structure « ridge » et une fibre optique ;

- Les figures 10a-10b représentent des images des modes optiques obtenus en sortie d'un guide d'onde optique à structure « ridge » pour les polarisations TE (Transverse Electrique) et TM (Transverse Magnétique) respectivement, avec une zone de transition verticale de mode optique entre le guide d'onde optique à structure « ridge » et une fibre optique ; et

- Les figures 11a-11b représentent des images des modes optiques obtenus en sortie d'un guide d'onde optique à structure « ridge » pour les polarisations TE (Transverse Electrique) et TM (Transverse Magnétique) respectivement, sans une zone de transition verticale de mode optique entre le guide d'onde optique à structure « ridge » et une fibre optique.

Il est à noter que les figures sont à titre illustratif et les dimensions des dispositifs optiques illustrés ne sont pas proportionnelles aux dimensions réelles de ces dispositifs.

**Modes de réalisation**

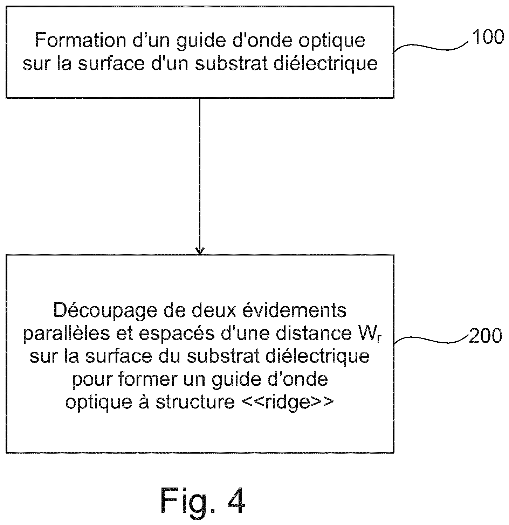

La figure 4 représente un mode de réalisation d'une méthode de fabrication d'un guide d'onde optique à structure « ridge » qui présente de faibles pertes de couplage lorsqu'il est couplé avec une fibre optique conventionnelle (par exemple une fibre optique de type SMF28 avec un mode optique faiblement confiné).

Dans une étape 100 de la méthode de la figure 4, la formation d'un guide d'onde optique est effectuée sur la surface d'un substrat diélectrique 10 afin d'assurer le confinement vertical de l'onde électromagnétique. Ce guide d'onde optique a une première extrémité A et une seconde extrémité B opposée à la première extrémité A.

Préférablement, le substrat diélectrique 10 est constitué du niobate de lithium ($LiNbO_3$). Il a été constaté que le substrat diélectrique de niobate de lithium ($LiNbO_3$) affiche des pertes de couplage entre le guide d'onde optique microruban standard (de type diffusion titane) et une fibre optique qui sont plus faibles que les pertes de couplage affichées par autres types de substrats diélectriques. Dans un autre exemple, le substrat diélectrique est constitué du verre. Cependant, il est à noter que le substrat diélectrique peut être constitué d'autres types des matériaux, à condition que l'onde électromagnétique puisse être confinée verticalement par ces matériaux.

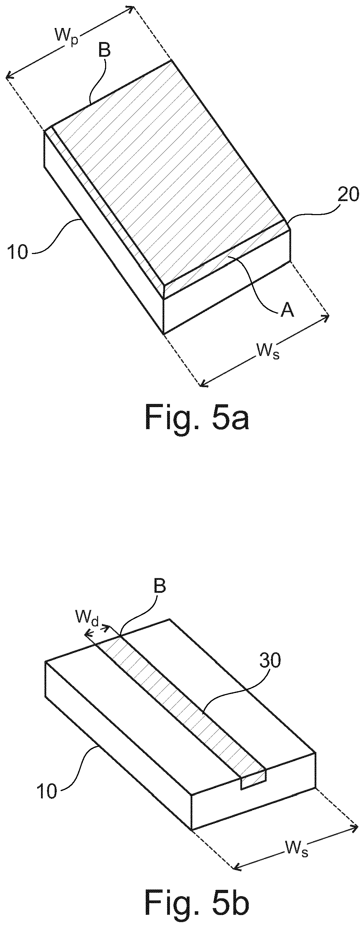

Selon un exemple illustré dans la figure 5a, le guide d'onde optique formé sur la surface du substrat diélectrique 10 est un guide d'onde optique planaire 20. Le guide d'onde optique planaire 20 est inscrit sur une certaine profondeur sur toute la surface du substrat diélectrique 10. Comme illustré dans la figure 5a, la largeur $w_p$ du guide d'onde optique planaire 20 est égale à la largeur $w_s$ du substrat diélectrique 10 et ainsi l'onde électromagnétique est confinée verticalement sur toute la largeur du substrat diélectrique 10. Le guide d'onde optique planaire 20 peut être formé sur la surface du substrat diélectrique 10 selon des techniques différentes (par exemple dépôt de titane suivi d'une diffusion titane, échange photonique suivi d'un recuit, implantation ionique, échange ionique, etc.) qui sont bien connues par l'homme du métier. Un exemple de ces techniques est donné dans la publication "S. Fouchet, A. Carenco, C. Daguet, R. Guglielmi, L. Riviere, Wavelength dispersion of Ti induced refractive index change in LiNbO3 as a function of diffusion parameters, Journal of Lightwave Technology, Volume:5, Issue:5, pp.700,708, May 1987". Particulièrement, dans cette publication, il est décrit qu'un guide d'onde planaire diffusé titane peut être obtenu à partir d'un dépôt de titane suivi d'une diffusion à une température de l'ordre de 1030 °C en atmosphère humide.

Selon un autre exemple illustré dans la figure 5b, le guide d'onde optique formé sur la surface du substrat diélectrique 10 est un guide d'onde optique microruban 30. Le guide d'onde optique microruban 30 comporte un ruban qui est inscrit sur une certaine profondeur de la surface du substrat diélectrique 10 et qui a une certaine largeur $w_d$. Comme illustré dans la figure 5b, la largeur $w_d$ du guide d'onde optique microruban 30 est plus faible que la largeur $w_s$ du substrat diélectrique 10. Dans le cas du guide d'onde optique microruban 30, l'onde électromagnétique est confinée verticalement seulement dans la zone du ruban de largeur $w_d$ et elle est guidée seulement à travers cette zone du ruban. On définit par zone du ruban, une zone comportant le ruban ainsi qu'une section autour du ruban, dans laquelle section l'énergie électromagnétique guidée est supérieure ou égale à 10% de l'énergie électromagnétique maximale du mode optique. Le guide d'onde optique microruban 30 peut être formé sur la surface du substrat diélectrique 10 selon des techniques différentes qui sont bien connues par l'homme du métier. Un exemple de ces techniques est donné dans la publication « Armenise, M.N., "Fabrication techniques of lithium niobate waveguides," Optoelectronics, IEE Proceedings J, vol.135, no.2, pp.85,91, Apr 1988 ». Particulièrement, dans cette publication il est décrit notamment qu'un guide d'onde optique microruban diffusé titane peut être réalisé à partir du dépôt d'un ruban de titane préalablement défini par une étape de lithographie, et puis diffusé à une température de l'ordre de 1030°C. Il est à noter que le guide d'onde optique microruban est aussi connu comme guide d'onde optique droit ou guide d'onde optique canal.

Il est à noter que l'étape 100 de formation d'un guide d'onde optique (planaire ou microruban) sur la surface du substrat diélectrique 10 afin d'assurer le confinement vertical de l'onde électromagnétique correspond à l'étape préliminaire de formation d'un guide d'onde optique (planaire ou microruban) sur la surface d'un substrat diélectrique de l'état de la technique. En outre, il est à noter qu'il est connu par l'homme du métier que le fait que le guide d'onde optique (planaire ou microruban) est formé sur la surface d'un substrat diélectrique signifie que le guide d'onde optique est défini par une zone ayant un indice de réfraction plus fort que l'indice de réfraction du substrat diélectrique, laquelle zone guide l'onde électromagnétique.

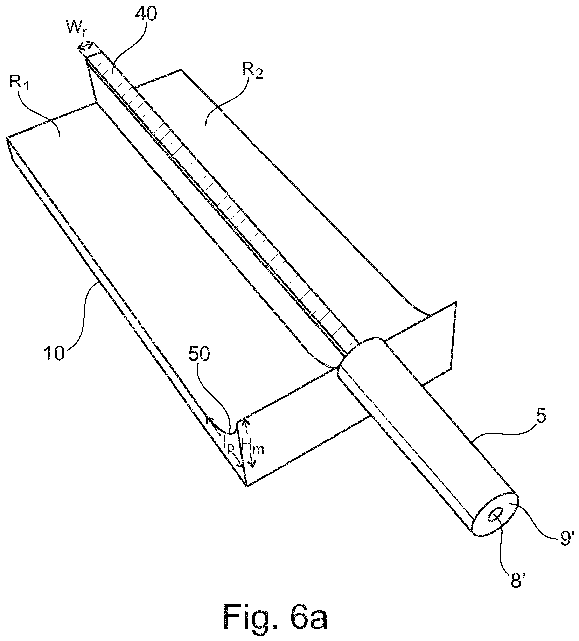

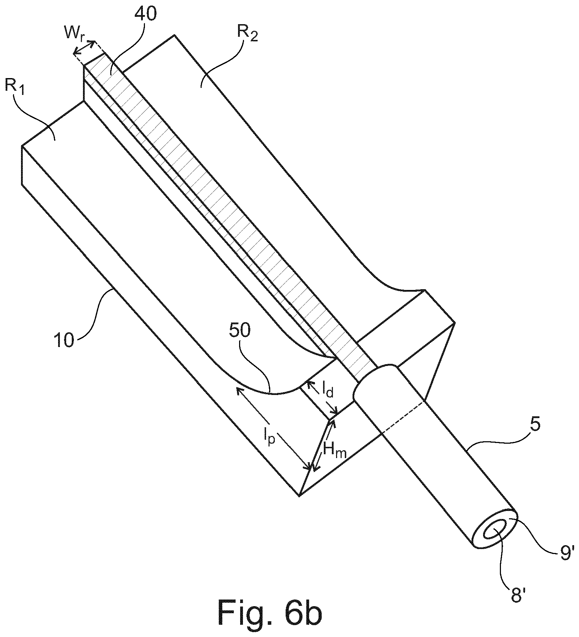

Dans une étape 200 de la méthode de la figure 4, le découpage de deux évidements R1, R2 parallèles et espacés d'une distance $w_r$ est effectué sur la surface du substrat diélectrique 10, afin de former un guide d'onde optique à structure « ridge » 40 d'une largeur $w_r$ surélevée entre les deux évidements R1, R2. Comme illustré dans les deux exemples des guides d'ondes optiques à structure « ridge » des figures 6a et 6b, ce découpage de deux évidements R1,R2 sur la surface du substrat diélectrique 10 est tel que la profondeur du premier évidement R1 et du second évidement R2 évolue continument et progressivement entre une profondeur nulleà la hauteur de la première extrémitédu guide d'onde optique destinée à recevoir une fibre optique 5,et une profondeur maximale $H_m$ à une distance prédéter-minée $l_p$ de la première extrémité du guide d'onde optique. L'évolution de la profondeur de chaque évidement R1 et R2 forme une zone de transition verticale 50 de mode optique entre le guide d'onde optique à structure « ridge » 40 et la fibre optique 5 qui est couplée avec le guide d'onde optique à structure « ridge » 40. Cette zone de transition verticale 50 a une longueur égale à la distance prédéterminée $l_p$ de la première extrémité du guide d'onde optique et présente un profil arrondi. En outre, comme illustré dans les deux exemples des guides d'ondes optiques à structure « ridge » des figures 6a et 6b, la fibre optique 5 couplée avec ces guides d'ondes optiques à structure « ridge » comporte un coeur 8' qui transmet l'énergie électromagnétique le long de la fibre optique 5 et qui est entouré d'une gaine 9'.

Cependant, il est à noter que dans l'exemple de la figure 6a, la diminution de la profondeur des deux évidements R1, R2 pendant le découpage de la surface du substrat diélectrique 10 est effectuée à partir de la première extrémité du guide d'onde optique planaire 20 de la figure 5a, alors que dans l'exemple de la figure 6b, la diminution de la profondeur des deux évidements R1, R2 est effectuée à partir d'une distance prédéterminée $l_d$ à partir de la première extrémité du guide d'onde optique microruban 30 de la figure 5b. Ainsi, dans l'exemple du guide d'onde optique à structure « ridge » 40 de la figure 6a, la zone de transition verticale 50 de mode optique entre le guide d'onde optique à structure « ridge » 40 et la fibre optique 5 commence à partir de la première extrémité du guide d'onde optique planaire 20 alors que dans l'exemple du guide d'onde optique à structure « ridge » 40 de la figure 6b, cette zone de transition verticale 50 commence à partir d'une distance prédéterminée $l_d$ à partir de la première extrémité du guide d'onde optique microruban 30.

Il est à noter que dans l'exemple du guide d'onde optique à structure « ridge » 40 de la figure 6b, le découpage du substrat diélectrique 10 est effectué sur les deux côtés du guide d'onde optique microruban 30 de telle manière que la largeur $w_r$ du guide d'onde optique à structure « ridge » 40 formé après ce découpage ait la même largeur, ou éventuellement plus grande, que la largeur $w_d$ du guide d'onde optique microruban 30 de la figure 5b.

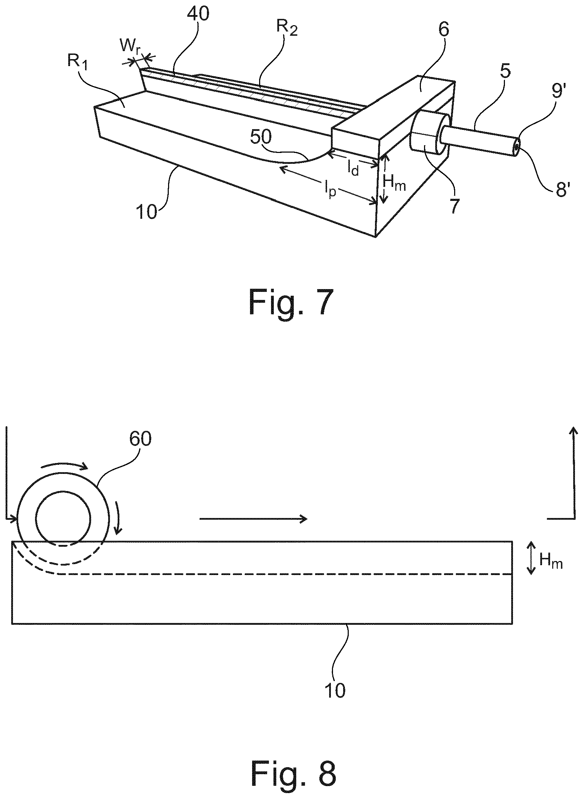

En outre, il est à noter que la configuration du guide d'onde optique à structure « ridge » 40 de la figure 6b, selon laquelle la diminution de la profondeur des deux évidements R1, R2 pendant le découpage de la surface du substrat diélectrique 10 est effectuée à partir d'une distance prédéterminée $l_d$ à partir de la première extrémité du guide d'onde optique microruban 30, présente l'avantage de permettre de coller une cale 6 sur la partie de la surface du substrat diélectrique 10 de longueur $l_d$ qui n'est pas découpée (voir la figure 7). La cale 6 sert à l'amélioration du collage entre le guide d'onde optique à structure « ridge » et la fibre optique puisque, comme illustré dans la figure 7, elle permet de coller une férule 7 à la hauteur de la première extrémité du guide d'onde optique afin de bien fixer la fibre optique 5 à la position de couplage avec le guide d'onde optique à structure « ridge » 40. Il est à noter que la cale 6 et la férule 7 sont des éléments déjà utilisés dans le domaine de guides d'ondes optiques et ils sont bien connus par l'homme du métier. Il est à noter que la figure 7 illustre un guide d'onde optique à structure « ridge » ayant la même configuration que le guide d'onde optique à structure « ridge » de la figure 6b et en plus comportant la cale 6 et la férule 7.

A titre d'exemple, le découpage de la surface du substrat diélectrique 10 pour la formation du guide d'onde optique à structure « ridge » 40 des figures 6a et 6b est un découpage mécanique. Le découpage mécanique peut être effectué au moyen d'une scie circulaire de précision bien connue par l'homme du métier (voir par exemple la publication « High aspect ratio lithium niobate ridge waveguides fabricated by optical grade dicing, J. Phys. D: Appl. Phys, 44 305101, (2011) »). Comme c'est le cas dans la publication mentionnée, la lame de la scie circulaire est programmée de telle manière qu'un polissage du substrat diélectrique 10 est effectué en même temps que le découpage du substrat diélectrique 10. Les critères importants pour obtenir un polissage de haute qualité en même temps que le découpage sont le type et la vitesse (vitesse de rotation et vitesse de translation) de la lame de la scie circulaire. L'homme du métier sait comment choisir le type et la vitesse de la lame de la scie circulaire au regard du substrat diélectrique utilisé.

Dans un exemple particulier, la lame de la scie circulaire est descendue progressivement à la hauteur de la distance prédéterminée $l_p$ de la première extrémité du guide d'onde optique, de sorte que la profondeur évolue comme un arc de cercle de rayon égal au rayon de la lame de la scie circulaire. Particulièrement, comme illustré dans la figure 8, une fois que la lame 60 atteint une profondeur $H_m$ souhaitée du substrat diélectrique 10 pour le découpage des évidements R1 et R2, elle est animée d'un mouvement de translation parallèle à la surface du substrat diélectrique 10. La trajectoire suivie par la scie circulaire 60, afin d'effectuer le découpage-polissage du substrat diélectrique 10, est représentée par les flèches de la figure 8.

La figure 8 illustre un exemple de découpage de la surface du substrat diélectrique 10 effectué pour fabriquer un guide d'onde optique à structure « ridge » ayant la configuration du guide d'onde optique à structure « ridge » de l'exemple de la figure 6a. Selon la configuration du guide d'onde optique à structure « ridge » de la figure 6a, la diminution de la profondeur des deux évidements R1, R2 pendant le découpage de la surface du substrat diélectrique 10 par la lame 60 est effectuée à partir de la première extrémité du guide d'onde optique planaire 20 de la figure 5a. Cependant, il est à noter que le découpage par la lame 60 peut aussi être tel que la diminution de la profondeur des deux évidements R1, R2 est effectuée à partir d'une distance prédéterminée $l_d$ à partir de la première extrémité du guide d'onde optique microruban 30 de la figure 5b, ainsi résultant à la configuration du guide d'onde optique à structure « ridge » 40 de la figure 6b. Dans ce cas-là, la lame 60 est programmée pour découper le substrat diélectrique 10 sur les deux côtés du guide d'onde optique microruban 30 de telle manière que la largeur $w_r$ du guide d'onde optique à structure « ridge » 40 formé après ce découpage ait la même largeur, ou éventuellement plus grande, que la largeur $w_d$ du guide d'onde optique microruban 30.

Dans un autre exemple, le découpage mécanique est effectué au moyen de deux scies circulaires de même axe et éloignées l'une de l'autre de la largeur $w_r$ du guide d'onde optique à structure « ridge ».

Dans un autre exemple, le découpage de la surface du substrat diélectrique 10 pour la formation du guide d'onde optique à structure « ridge » 40 des figures 6a et 6b est effectuée par gravure laser au lieu de découpage mécanique. Selon un exemple, un laser femtoseconde est utilisé, au lieu d'une scie circulaire, pour effectuer le découpage de la surface du substrat diélectrique 10 afin de former les guides d'ondes optiques à structure « ridge » des exemples de la figure 6a et la figure 6b, qui comportent une zone de transition verticale 50 de mode optique entre le guide d'onde optique à structure « ridge » et la fibre optique. Particulièrement, le découpage d'un substrat diélectrique constitué de niobate de lithium ($LiNbO_3$) ou de verre nécessite un laser femtoseconde avec une fluence minimale de 1 $J/cm^2$. Cependant, il est à noter que dû aux altérations chimiques et structurelles générées par le spot laser, le découpage du substrat diélectrique au moyen du rayon de lumière d'un laser femtoseconde forme des guides d'ondes optiques à structure « ridge » ayant une rugosité plus importante que la rugosité des guides d'ondes optiques à structure « ridge » formés par le découpage du substrat diélectrique au moyen de la lame d'une scie circulaire.

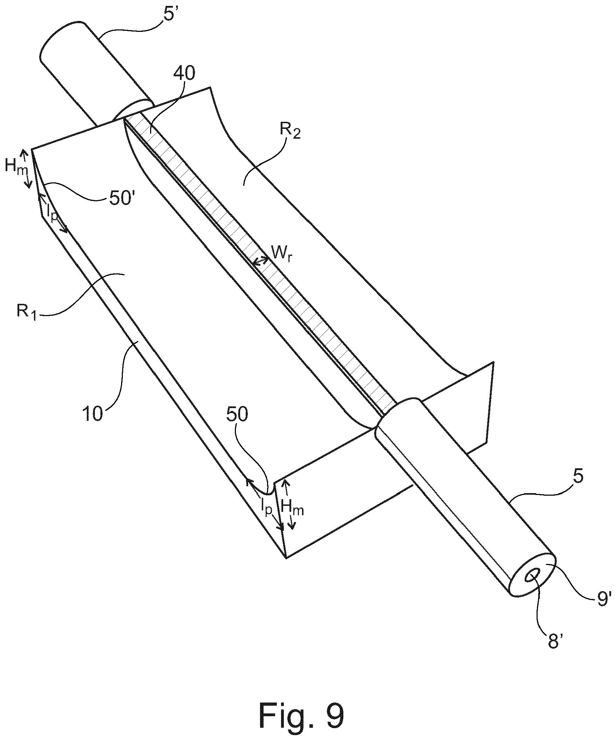

Par ailleurs, dans un autre exemple illustré dans la figure 9, le découpage du substrat diélectrique 10, est tel qu'en dehors de la formation d'une zone de transition verticale 50 de mode optique entre le guide d'onde optique à structure « ridge » 40 et la fibre optique 5 décrite ci-dessus, la formation d'une seconde zone de transition 50' de mode optique est effectuée entre le guide d'onde optique à structure « ridge » 40 et une fibre optique 5' couplée avec le guide d'onde optique à structure « ridge » 40 sur la seconde extrémité du guide d'onde optique. Particulièrement, dans cet exemple, la profondeur de chaque évidement (R1, R2) évolue continument et progressivement entre une profondeur nulle à la hauteur de la seconde extrémité du guide d'onde optique destinée à recevoir la fibre optique 5', et une profondeur maximale à une distance prédéterminée ($l_p$) de la seconde extrémité du guide d'onde optique. L'évolution de la profondeur de chaque évidement (R1, R2) forme une zone de transition verticale 50' de mode optique de longueur ($l_p$) entre le guide d'onde optique à structure « ridge » et la fibre optique 5' couplée avec le guide d'onde optique à structure « ridge » 40. Cette zone de transition verticale 50' de mode optique entre le guide d'onde optique à structure « ridge » 40 et la fibre optique 5' a une longueur égale à la distance prédéterminée $l_p$ de la seconde extrémité du guide d'onde optique et présente un profil arrondi, comme c'est le cas de la zone de transition verticale 50 de mode optique entre le guide d'onde optique à structure « ridge » 40 et la fibre optique 5.

Le découpage du substrat diélectrique 10 dans l'exemple de la figure 9 peut être effectué au moyen d'une scie circulaire ou au moyen d'un laser femtoseconde. Selon un exemple particulier (non illustré dans les figures), où ce découpage est effectué au moyen d'une lame de la scie circulaire, cette lame est descendue progressivement à la hauteur de la distance prédéterminée ($l_p$) de la première extrémité du guide d'onde optique destinée à recevoir la fibre optique 5, de sorte que la profondeur évolue comme un arc de cercle de rayon égal au rayon de la lame de la scie circulaire. Une fois que la lame atteint une profondeur souhaitée du substrat diélectrique 10 pour le découpage des évidements R1 et R2, elle est animée d'un mouvement de translation parallèle à la surface du substrat diélectrique 10. Puis, une fois que la lame atteint une distance prédéterminée ($l_p$) de la seconde extrémité du guide d'onde optique, elle est montée continument et progressivement de sorte que la profondeur évolue comme un arc de cercle de rayon égal au rayon de la lame de la scie circulaire, jusqu'à atteint une profondeur nulle à la hauteur de la seconde extrémité du guide d'onde optique destinée à recevoir la fibre optique 5'.

Il est à noter que dans l'exemple de la figure 9, la diminution de la profondeur des deux évidements R1, R2 pendant le découpage de la surface du substrat diélectrique 10 est effectuée à partir de la première extrémité et de la seconde extrémité du guide d'onde optique planaire 20 de la figure 5a. Cependant, selon un autre exemple, la diminution de la profondeur des deux évidements R1, R2 est effectuée à partir d'une distance prédéterminée $l_d$ à partir de la première extrémité et de la seconde extrémité du guide d'onde optique microruban 30 de la figure 5b.

Il est à noter qu'après expérimentation il a été constaté que la zone de transition verticale 50 de mode optique entre les guides d'ondes optiques à structure « ridge » et une fibre optique permet de réduire significativement les pertes de couplage entre le mode optique du guide d'onde optique à structure « ridge » et le mode optique de la fibre optique. Dans une expérience, les pertes de couplage entre le guide d'onde optique à structure « ridge » et une fibre optique conventionnelle SMF28 ont été mesurées pour un guide d'onde optique à structure « ridge » sans une telle zone de transition verticale 50 (voir le guide d'onde optique à structure « ridge » de la figure 1) et un guide d'onde optique à structure « ridge » avec une telle zone de transition verticale 50. En ce qui concerne le guide d'onde optique à structure « ridge » de la figure 1, les pertes de couplage pour les polarisations TE (Transverses Electriques) et pour les polarisations TM (Transverses Magnétiques) de l'onde électromagnétique sont approximativement de 2.8dB. D'autre part, en ce qui concerne le guide d'onde optique à structure « ridge » avec une zone de transition verticale 50, les pertes de couplage pour les polarisations TE (Transverses Electriques) et pour les polarisations TM (Transverses Magnétiques) de l'onde électromagnétique sont approximativement de 0.8dB. Il est à noter que les deux guides d'ondes optiques à structure « ridge » comparés (sans et avec la zone de transition verticale 50) ont été fabriqués dans les mêmes conditions, avec les mêmes dimensions, c'est-à-dire d'une largeur de 6μm et d'une profondeur de 30μm.

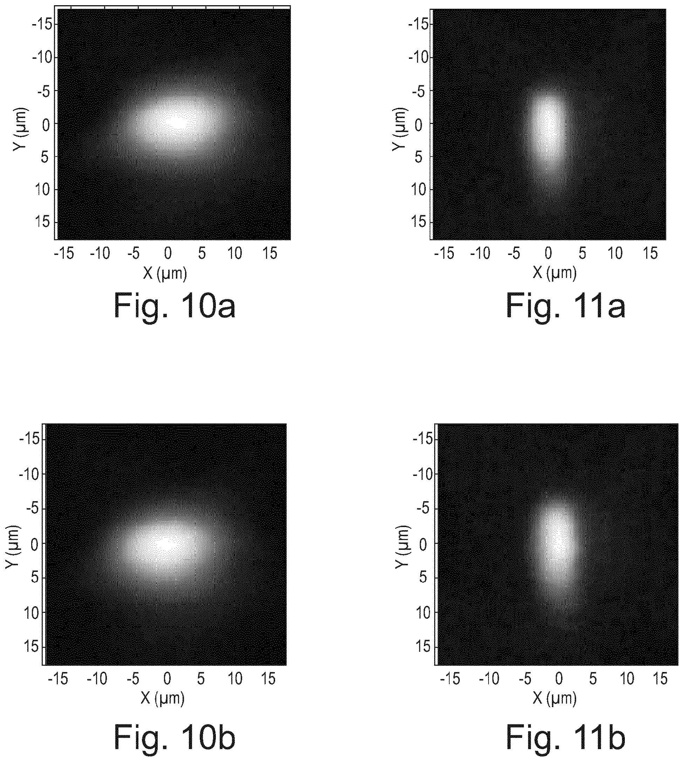

Particulièrement, il a été constaté que cette zone de transition verticale 50 sert à convertir le mode optique du guide d'onde optique à structure « ridge » en un mode optique moins confiné qui est adapté au mode optique de la fibre optique. Particulièrement, les figures 10a-10b représentent des images des modes optiques obtenus en sortie d'un guide d'onde optique à structure « ridge » avec une zone de transition verticale 50, pour les polarisations TE (Transverses Electriques) et TM (Transverses Magnétiques) respectivement, alors que les figures 11a-11b représentent des images des modes optiques obtenus en sortie d'un guide d'onde optique à structure « ridge » sans une zone de transition verticale 50 pour les polarisations TE (Transverses Electriques) et TM (Transverses Magnétiques) respectivement. Il est à noter que les modes optiques obtenus en sortie des guides d'ondes optiques à structure « ridge » des figures 10a-10b et des figures 11a-11b représentent la distribution de l'énergie électromagnétique en sortie de ces guides d'ondes optiques à structure « ridge » obtenue en injectant dans ces guides d'ondes optiques à structure « ridge » une onde électromagnétique issue d'un laser ayant une longueur d'onde de 1550 nm et une puissance optique de 0.2 mW. Les guides d'ondes optiques à structure « ridge » des figures 10a-10b et 11a-11b sont fabriqués dans les mêmes conditions et ont les mêmes dimensions, c'est-à-dire une largeur de 6μm et une profondeur de 30μm.

En comparant les figures 10a et 11a ainsi que les figures 10b et 11b, il est clair que les modes optiques obtenus en sortie d'un guide d'onde optique à structure « ridge » avec une zone de transition verticale 50 sont moins confinés que les modes optiques obtenus en sortie d'un guide d'onde optique à structure « ridge » sans une zone de transition verticale 50. Ainsi, le confinement des modes optiques obtenus en sortie d'un guide d'onde optique à structure « ridge » avec une zone de transition verticale 50 est plus adapté aux modes optiques d'une fibre optique conventionnelle qui sont faiblement confinés. En outre, les pertes de couplage entre les modes optiques des guides d'ondes optiques à structure « ridge » des figures 10a-10b et 11a-11b et le mode optique d'une fibre optique conventionnelle peuvent s'évaluer à l'aide de l'intégrale de recouvrement *n* (voir équation 1) entre le mode optique de ces guides d'ondes optiques à structure « ridge » et le mode optique de la fibre optique conventionnelle. Particulièrement, il a été constaté que l'intégrale de recouvrement n est seulement 52% lorsque la fibre optique est connectée au guide d'onde optique à structure « ridge » des figures 11a-11b sans une zone de transition verticale 50, alors qu'elle est 80 % lorsque la fibre optique est connectée au guide d'onde optique à structure « ridge » des figures 10a-10b avec une zone de transition verticale 50.

Il est à noter que les guides d'ondes optiques à structure « ridge » fabriqués par la méthode de la figure 4 peuvent être utilisés dans nombreux domaines comme par exemple le domaine d'aérospatial, le domaine des télécommunications optiques et le domaine des lasers.

En outre, il est à noter que la méthode de la figure 4 convient particulièrement aux guides d'ondes optiques à structure « ridge » à gradient d'indice de réfraction en surface du substrat diélectrique, pour lesquels l'onde électromagnétique est guidée grâce à une variation continue verticale de l'indice de réfraction en surface du substrat diélectrique, ou aux guides d'ondes optiques à structure « ridge » à saut d'indice de réfraction en surface du substrat diélectrique, pour lesquels l'onde électromagnétique est guidée grâce à une variation locale de l'indice de réfraction en surface du substrat diélectrique.

Il est à noter que dans tous les deux cas (guides d'ondes optiques à gradient d'indice de réfraction ou à saut d'indice de réfraction), l'onde électromagnétique est guidée dans le guide d'onde optique grâce à une zone d'indice de réfraction plus fort que l'indice de réfraction du substrat diélectrique. Cette zone de fort indice de réfraction définit le guide d'onde optique formé par l'étape 100 de la figure 4 qui peut être soit un guide d'onde planaire soit un guide d'onde microruban. En outre, il est à noter que cette zone d'indice de réfraction plus fort que l'indice de réfraction du substrat diélectrique résulte des différentes techniques pour la formation d'un guide d'onde planaire ou d'un guide d'onde microruban décrites ci-dessus (voir les publications de S. Fouchet et al. et de M.N Armenise mentionnés ci-dessus).

Le fait que l'onde électromagnétique est guidée dans le guide d'onde optique grâce à une zone d'indice de réfraction plus fort que l'indice de réfraction du substrat diélectrique permet d'obtenir des faibles pertes de couplage entre le guide d'onde optique à structure « ridge » et la fibre optique en utilisant des substrats diélectriques ayant des épaisseurs entre 200nm et plusieurs mm. En particulier, il a été constaté que les pertes de couplage entre le guide d'onde optique à structure « ridge » et la fibre optique sont réduites significativement pour des épaisseurs du substrat diélectrique supérieures à 10 μm. Il est à noter que si l'onde électromagnétique a été guidée dans le substrat diélectrique et pas par une zone d'indice de réfraction plus fort que l'indice de réfraction du substrat diélectrique comme décrit ci-dessus, il ne serait pas possible d'obtenir des faibles pertes de couplage en utilisant des épaisseurs du substrat diélectrique supérieures à 10 μm parce que le plus l'épaisseur du substrat diélectrique augmente à partir de 10 μm, moins est fort le recouvrement du mode optique du guide d'onde optique à structure « ridge » avec le mode optique d'une fibre optique conventionnelle qui a une largeur à mi-hauteur latérale et verticale du mode optique typiquement de l'ordre de 5 μm.

En outre, il a été constaté que les pertes optiques dans les zones de transition verticale 50 et 50' des figures 6a, 6b, 7 et 9 sont faibles, et particulièrement elles sont inférieures à 0.1dB lorsque le rayon de courbure des zones de transition verticale 50 et 50' est supérieur à 20mm. Dans ce cas là, il n'y a pas besoin de traitement ultérieur (par laser ou faisceau ionique focalisé) du guide d'onde optique à structure « ridge » pour améliorer les pertes optiques. Comme il est connu par l'homme du métier, les pertes optiques dans la zone de transition verticale correspondent au rapport entre la puissance optique de la sortie de la zone de transition verticale et la puissance optique de l'entrée de la zone de transition verticale.

Aussi, il a été constaté que le confinement latéral du mode optique du guide d'onde optique à structure « ridge » est amélioré si la profondeur des évidements est supérieure à 10 $\mu$m.

**Revendications**

1. Méthode de fabrication d'un guide d'onde optique à structure« ridge» (40) à faibles pertes de couplage entre le guide d'onde optique à structure « ridge » (40) et une fibre optique (5), la méthode comportant les étapes suivantes:

   - formation (100) d'un guide d'onde optique sur la surface d'un substrat diélectrique(10), le guide d'onde optique ayant une première extrémité (A) et une seconde extrémité (B) opposée à la première extrémité (A);
   - découpage (200) de deux évidements (R1, R2) parallèles et espacés d'une distance $w_r$ sur la surface du substrat diélectrique pour former un guide d'onde optique à structure « ridge » (40) d'une largeur ($w_r$) surélevé entre les deux évidements (R1, R2),

   **caractérisée en ce que** le découpage est tel que la profondeur de chaque évidement (R1, R2) évolue continument et progressivement entre une profondeur nulle à la hauteur de la première extrémité du guide d'onde optique destinée à recevoir la fibre optique,et une profondeur maximale ($H_m$) à une distance prédéterminée ($l_p$) de la première extrémité du guide d'onde optique, l'évolution de la profondeur de chaque évidement (R1, R2) formant une zone de transition verticale (50) de mode optique de longueur ($l_p$) entre le guide d'onde optique à structure « ridge » (40) et la fibre optique (5).

2. Méthode selon la revendication 1, dans laquelle le guide d'onde optique (20) est un guide d'onde planaire.

3. Méthode selon la revendication 2, dans laquelle la diminution de la profondeur de chaque évidement (R1, R2) est effectuée à partir de la première extrémité du guide d'onde optique.

4. Méthode selon la revendication 1, dans laquelle le guide d'onde optique (20) est un guide d'onde microruban.

5. Méthode selon la revendication 4, dans laquelle la diminution de la profondeur de chaque évidement (R1, R2) est effectuée à partir d'une distance prédéterminée ($l_d$) à partir de la première extrémitédu guide d'onde optique.

6. Méthode selon l'une quelconque des revendications précédentes, dans laquelle le découpage est un découpage mécanique.

7. Méthode selon la revendication 6, dans laquelle le découpage mécanique est effectué au moyen d'une scie circulaire comportant au moins une lame.

8. Méthode selon la revendication 7, dans laquelle le découpage mécanique est effectué au moyen d'une lame (60) de la scie circulaire.

9. Méthode selon l'une quelconque des revendications 7 ou 8, dans laquelle la lame (60) est descendue progressivement à la hauteur de la distance prédéterminée ($l_p$) de la première extrémitédu guide d'onde optique, de sorte que la profondeur évolue comme un arc de cercle de rayon égal au rayon de la lame (60) de la scie circulaire.

10. Méthode selon la revendication 9, dans laquelle une fois que la lame (60) atteint une profondeur désirée des évidements (R1, R2), elle est animée d'un mouvement de translation parallèle à la surface du substrat diélectrique (10).

11. Méthode selon la revendication 7, dans laquelle le découpage mécanique est effectué au moyen de deux lames de la scie circulaire de même axe et éloignées l'une de l'autre de la largeur ($w_r$) du guide d'onde optique à structure « ridge ».

12. Méthode selon l'une quelconque des revendications 1-5, selon laquelle le découpage est effectué par gravure laser.

13. Méthode selon l'une quelconque des revendications précédentes, dans laquelle le découpage est tel que la profondeur de chaque évidement (R1, R2) évolue continûment et progressivement entre une profondeur nulleà la hauteur de la seconde extrémité du guide d'onde optique et une profondeur maximale à une distance prédéterminée ($I_d$) de la seconde extrémitédu guide d'onde optiquedestinée à recevoir une fibre optique, l'évolution de la profondeur de chaque évidement (R1, R2) formant une zone de transitionverticale (50')de mode optique de longueur ($I_d$) entre le guide d'onde optique à structure « ridge » et une fibre optique (5').

14. Guide d'onde optique à structure « ridge » à faibles pertes de couplage entre le guide d'onde optique à structure « ridge » et une fibre optique, **caractérisé en ce qu'**il est fabriqué par la méthode selon l'une quelconque des revendications précédentes.

**Patentansprüche**

1. Verfahren zum Herstellen eines optischen Wellenleiters mit "starrer" Struktur (40) mit geringen Koppelverlusten zwischen dem optischen Wellenleiter mit "starrer" Struktur (40) und einer optischen Faser (5), wobei das Verfahren die folgenden Schritte umfasst:

   - Bilden (100) eines optischen Wellenleiters an der Oberfläche eines dielektrischen Substrats (10), wobei der optische Wellenleiter ein erstes Ende (A), und ein dem ersten Ende (A) gegenüberliegendes zweites Ende (B) aufweist;
   - Schneiden (200) von zwei parallelen und um einen Abstand $w_r$ beabstandeten Ausnehmungen (R1, R2) an der Oberfläche des dielektrischen Substrats, um einen optischen Wellenleiter mit "starrer" Struktur (40) einer Breite ($w_r$) zu bilden, der zwischen den zwei Ausnehmungen (R1, R2) aufragt,

   **dadurch gekennzeichnet, dass** das Schneiden so geschieht, dass sich die Tiefe jeder Ausnehmung (R1, R2) kontinuierlich und zunehmend zwischen einer Tiefe von Null auf der Höhe des ersten Endes des optischen Wellenleiters, welches dazu vorgesehen ist, die optische Faser aufzunehmen, und einer maximalen Tiefe ($H_m$) in einem vorbestimmten Abstand ($I_p$) vom ersten Ende des optischen Wellenleiters entwickelt, wobei die Entwicklung der Tiefe jeder Ausnehmung (R1, R2) eine vertikale Übergangszone (50) von optischem Modus einer Länge ($I_p$) zwischen dem optischen Wellenleiter mit "starrer" Struktur (40) und der optischen Faser (5) bildet.

2. Verfahren nach Anspruch 1, wobei der optische Wellenleiter (20) ein planarer Wellenleiter ist.

3. Verfahren nach Anspruch 2, wobei das Verringern der Tiefe jeder Ausnehmung (R1, R2) ab dem ersten Ende des optischen Wellenleiters erfolgt.

4. Verfahren nach Anspruch 1, wobei der optische Wellenleiter (20) ein Mikrostreifen-Wellenleiter ist.

5. Verfahren nach Anspruch 4, wobei das Verringern der Tiefe jeder Ausnehmung (R1, R2) ab einem vorbestimmten Abstand ($I_d$) ab dem ersten Ende des optischen Wellenleiters erfolgt.

6. Verfahren nach einem der vorstehenden Ansprüche, wobei das Schneiden ein mechanisches Schneiden ist.

7. Verfahren nach Anspruch 6, wobei das mechanische Schneiden mittels einer Kreissäge erfolgt, die mindestens eine Klinge umfasst.

8. Verfahren nach Anspruch 7, wobei das mechanische Schneiden mittels einer Klinge (60) der Kreissäge erfolgt.

9. Verfahren nach einem der Ansprüche 7 oder 8, wobei die Klinge (60) auf der Höhe des vorbestimmten Abstands ($I_p$) vom ersten Ende des optischen Wellenleiters zunehmend abgesenkt wird, sodass sich die Tiefe wie ein Kreisbogen eines Radius gleich dem Radius der Klinge (60) der Kreissäge entwickelt.

10. Verfahren nach Anspruch 9, wobei, sobald die Klinge (60) eine gewünschte Tiefe der Ausnehmungen (R1, R2) erreicht, sie von einer Translationsbewegung parallel zur Oberfläche des dielektrischen Substrats (10) animiert wird.

11. Verfahren nach Anspruch 7, wobei das mechanische Schneiden mittels zweier Klingen der Kreissäge von gleicher Achse und um die Breite ($w_r$) des optischen Wellenleiters mit "starrer" Struktur voneinander beabstandet erfolgt.

12. Verfahren nach einem der Ansprüche 1-5, wobei das Schneiden durch Lasergravur erfolgt.

13. Verfahren nach einem der vorstehenden Ansprüche, wobei das Schneiden so geschieht, dass sich die Tiefe jeder Ausnehmung (R1, R2) kontinuierlich und zunehmend zwischen einer Tiefe von Null auf der Höhe des zweiten Endes des optischen Wellenleiters, und einer maximalen Tiefe in einem vorbestimmten Abstand ($l_d$) vom zweiten Ende des optischen Wellenleiters, welches dazu vorgesehen ist, eine optische Faser aufzunehmen, entwickelt, wobei die Entwicklung der Tiefe jeder Ausnehmung (R1, R2) einen vertikalen Übergangsbereich (50') von optischem Modus von Länge ($l_d$) zwischen dem optischen Wellenleiter mit "starrer" Struktur und einer optischen Faser (5') bildet.

14. Optischer Wellenleiter mit "starrer" Struktur mit geringen Koppelverlusten zwischen dem optischen Wellenleiter mit "starrer" Struktur und einer optischen Faser, **dadurch gekennzeichnet, dass** er über das Verfahren nach einem der vorstehenden Ansprüche hergestellt wird.

**Claims**

1. A method for producing a ridge optical waveguide (40) having low coupling losses between the ridge optical waveguide (40) and an optical fiber (5), the method comprising the following steps:

   - formation (100) of an optical waveguide on the surface of a dielectric substrate (10), the optical waveguide having a first end (A) and a second end (B) opposite to the first end (A);
   - dicing (200) of two parallel recesses (R1, R2) separated by a distance $w_r$ on the surface of the dielectric substrate so as to form a ridge optical waveguide (40) with a width ($w_r$) raised up between the two recesses (R1, R2),

   **characterized in that** the dicing is such that the depth of each recess (R1, R2) varies continuously and progressively between a depth of zero at the location of the first end of the optical waveguide designed to receive the optical fiber, and a maximum depth ($H_m$) at a predetermined distance ($l_p$) from the first end of the optical waveguide, the depth variation of each recess (R1, R2) forming a vertical optical mode transition region (50) of length ($l_p$) between the ridge optical waveguide (40) and the optical fiber (5).

2. The method as claimed in claim 1, in which the optical waveguide (20) is a planar waveguide.

3. The method as claimed in claim 2, in which the depth reduction of each recess (R1, R2) is carried out starting from the first end of the optical waveguide.

4. The method as claimed in claim 1, in which the optical waveguide (20) is a microstrip waveguide.

5. The method as claimed in claim 4, in which the depth reduction of each recess (R1, R2) is carried out starting from a predetermined distance ($l_d$) from the first end of the optical waveguide.

6. The method as claimed in any one of the preceding claims, in which the dicing is a mechanical dicing.

7. The method as claimed in claim 6, in which the mechanical dicing is carried out by means of a circular saw comprising at least one blade.

8. The method as claimed in claim 7, in which the mechanical dicing is carried out by means of a blade (60) of the circular saw.

9. The method as claimed in either one of claims 7 and 8, in which the blade (60) is progressively lowered at the location of the predetermined distance ($l_p$) from the first end of the optical waveguide, in such a manner that the depth varies as a circular arc of radius equal to the radius of the blade (60) of the circular saw.

10. The method as claimed in claim 9, in which, once the blade (60) reaches a desired depth of the recesses (R1, R2), it executes a translational movement parallel to the surface of the dielectric substrate (10).

11. The method as claimed in claim 7, in which the mechanical dicing is carried out by means of two blades of the circular saw with the same axis and set apart from one another by the width ($w_r$) of the ridge optical waveguide.

12. The method as claimed in any one of claims 1-5, according to which the dicing is carried out by laser etching.

13. The method as claimed in any one of the preceding claims, in which the dicing is such that the depth of each recess (R1, R2) varies continuously and progressively between a depth of zero at the location of the second end of the optical waveguide and a maximum depth at a predetermined distance ($l_d$) from the second end of the optical waveguide designed to receive an optical fiber, the depth variation of each recess (R1, R2) forming a vertical optical mode transition region (50') of length ($l_d$) between the ridge optical waveguide and an optical fiber (5').

14. A ridge optical waveguide having low coupling losses between the ridge optical waveguide and an optical fiber, **characterized in that** it is fabricated by the method as claimed in any one of the preceding claims.

Fig. 1

Fig. 2

Fig. 3

Formation d'un guide d'onde optique
sur la surface d'un substrat diélectrique ⟋100

Découpage de deux évidements
parallèles et espacés d'une distance $W_r$
sur la surface du substrat diélectrique
pour former un guide d'onde
optique à structure <<ridge>> ⟋200

# Fig. 4

Fig. 5a

Fig. 5b

Fig. 6a

Fig. 6b

Fig. 7

Fig. 8

Fig. 9

Fig. 10a

Fig. 11a

Fig. 10b

Fig. 11b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- High aspect ratio lithium niobate ridge waveguides fabricated by optical grade dicing. *J. Phys. D: Appl. Phys,* 2011, vol. 44, 305101
- **S. FOUCHET ; A. CARENCO ; C. DAGUET ; R. GUGLIELMI ; L. RIVIERE.** Wavelength dispersion of Ti induced refractive index change in LiNbO3 as a function of diffusion parameters. *Journal of Lightwave Technology,* Mai 1987, vol. 5 (5), 700, , 708

- **ARMENISE, M.N.** Fabrication techniques of lithium niobate waveguides. *Optoelectronics, IEE Proceedings J,* Avril 1988, vol. 135 (2), 85, , 91